# EUROPÄISCHE PATENTSCHRIFT

(11) **EP 1 551 663 B1**
(45) Veröffentlichungstag und Bekanntmachung des Hinweises auf die Patenterteilung: **26.07.2006**
(21) Anmeldenummer: 03750581.5
(22) Anmeldetag: 19.09.2003
(51) Int. Cl.: B60W 10/00

(54) **VORRICHTUNG ZUM STEUERN EINES MOTORS ODER GETRIEBES**
DEVICE FOR CONTROLLING AN ENGINE OR A GEARBOX
DISPOSITIF POUR COMMANDER UN MOTEUR OU UNE TRANSMISSION

(30) Priorität: 19.10.2002 DE 10248843
(43) Veröffentlichungstag der Anmeldung: 13.07.2005
(73) Patentinhaber: DaimlerChrysler AG, 70567 Stuttgart (DE)
(72) Erfinder: MEYER, Werner, 70736 Fellbach (DE); SCHMITFRANZ, Bernd-Heinrich, 73733 Esslingen (DE)
(86) Internationale Anmeldenummer: PCT/EP2003/010459
(87) Internationale Veröffentlichungsnummer: WO 2004/037599

(56) Entgegenhaltungen:
- EP-B- 0 388 107
- US-A- 5 408 471
- US-A- 5 675 189
- US-A- 5 928 110

## Beschreibung

Die Erfindung betrifft eine Vorrichtung zum Steuern eines Motors und/oder Getriebes mit einem zum Motor/Getriebe entfernt angeordneten Steuergerät, welches die Steuer- bzw. Regelalgorithmen vorsieht, und einer unmittelbar mit mehreren Sensoren und/oder Aktoren elektrisch leitend verbundenen Einheit, die am Motor/Getriebe befestigt ist, wobei die Einheit einen A/D-Wandler zur Wandlung der von den Sensoren stammenden Sensorsignale in digitale Sensorsignale aufweist und die digitalen Sensorsignale durch eine Datenbus-Sende-/Empfangseinheit in Datenbussignale gewandelt werden, um zwischen der Einheit und dem entfernt angeordneten Steuergerät über einen Datenbus kommunizierbar zu sein.

Aus der EP 0 388 107 A, der EP 0 758 726 A2 und der DE 100 36 601 A1 sind jeweils eine Steuerung für ein Kraftfahrzeug mit einem automatischen Getriebe bekannt. Das Steuergerät mit dem Steuer-/Regelalgorithmus für das Getriebe ist als Anbau-Steuergerät am Getriebe befestigt. Über einen Stecker sind jeweils innerhalb des Getriebes angeordnete Sensoren und Aktoren mit dem Steuergerät verbunden. Da das Steuergerät am Getriebe angebaut ist, muss dieses einerseits hitzeresistent und gegen Verschmutzungen mit erhöhtem Aufwand gesichert werden. Ferner muss bei der Herstellung und im Zusammenbau des Getriebes jeweils ein Steuergerät passend zum Getriebe vorgesehen sein. Im Zusammenhang mit einem alternativen Getriebe für das selbe Kraftfahrzeug, bei dem mehr Sensoren verwendet werden, muss ein hardwaremäßig verändertes Steuergerät am Getriebe angebaut werden. Infolgedessen muss bei Veränderungen bezüglich des Getriebes jedes Mal auch die Steuergeräte-Hardware verändert werden.
Die DE 199 63 610 A1 offenbart ein Datenbussystem mit Steuergeräten für Kraftfahrzeuge, wobei jedes Steuergerät in eine Operationssteuerfunktion und eine I/O-Verarbeitungsfunktion unterteilt ist. Jeder Funktion ist dabei ein eigener Mikrocontroller zugeordnet und je eine Operationssteuerfunktion und eine I/O-Verarbeitungsfunktion bilden zusammen ein Steuergerät. Bei Verkehrsmitteln mit Getriebevarianten muss daher dass Steuergerät jedes Mal auf die andere Getriebevariante angepasst werden, was zu einem hohen Aufwand führt.

Die DE 199 48 969 A1 offenbart eine Steuervorrichtung für einen aus Motor und Getriebe bestehenden Fahrzeugantriebsstrang. Es ist ein entfernt vom Getriebe angeordnetes erstes Steuergerät und ein am Getriebe vorgesehenes zweites Getriebesteuergerät vorgesehen. Elektronische Bauteile mit hoher Verlustleitung, insbesondere Endstufen, werden im Getriebesteuergerät eingebaut, das wegen des Anbaus am Getriebe hitzebeständig ausgeführt sein muss. Beide Steuergeräte verfügen über mindestens einen Mikrorechner, Speicher und Endstufen zur Ansteuerung von Sensoren und Aktoren. Der Mikrorechner arbeitet Software zur Ausführung von Steuer- und Regelungsalgorithmen ab und führt eine Sensorsignalaufbereitung durch. Da die Sensoren und Aktoren direkt am Getriebesteuergerät angeordnet sein müssen, wird mit einer Steuergeräteversion nur eine geringe Anzahl von Aggregaten bzw. Fahrzeugvarianten abgedeckt. Dies bedeutet für unterschiedliche Motortypen und Baureihen bei Kraftfahrzeugen, dass für Benzin- oder Dieselvarianten bzw. unterschiedliche Zylinderzahlen jeweils ein Steuergerät mit anderen Schnittstellen für Sensoren entwickelt werden muss. Außerdem muss zur Erhöhung der Rechenleistung und zur Darstellung zusätzlicher Funktionalitäten bei den herkömmlichen Steuergerätekonzepten ein neues Steuergerät entwickelt werden.

Bei den am Triebsstrang, d.h. am Motor oder am Getriebe angebauten Steuergeräten ist die Temperaturbelastung für die dort vorgesehenen Elektronikbauelemente, insbesondere für die zunehmend komplexeren Mikrorechner und Speicher, sehr hoch und verursacht zusätzliche Kosten für die Qualifikation der Bauelemente für die aggregatesspezifischen Umgebungstemperaturen. Wird das betreffende Steuergerät entfernt von den Aggregaten, beispielsweise dem Getriebe, angeordnet, ist bisher eine umfangreiche Verkabelung zwischen den Aggregaten und Steuergeräten zur Anbindung der Sensoren und Aktoren notwendig.

Der vorliegenden Erfindung liegt die Aufgabe zugrunde, eine Vorrichtung zum Steuern eines Motors/Getriebes mit einem zum Motor/Getriebe entfernt angeordneten Steuergerät vorzusehen, wobei der Verkabelungsaufwand zu den Sensoren und Aktoren am Aggregat verringert wird. Eine weitere Aufgabe der vorliegenden Erfindung besteht darin, die elektronische Ankopplung der Sensoren und Aktoren am Steuergerät derart vorzusehen, dass für die verschiedenen Triebstrangvarianten mit den unterschiedlichen Sensoren und Aktoren lediglich eine geringe Zahl von Steuergerätevarianten erforderlich ist.

Die Aufgabe wird erfindungsgemäß durch die Merkmale des Anspruchs 1 gelöst. Danach sind mehrere Steuergeräte mit einheitlicher Datenbus-Sende-/Empfangseinheit ausgeführt, an die jeweils ein Aggregatedatenbus angekoppelt ist, die Einheit ist als aggregatespezifisches Sensor-/Aktor-Interface mit mehreren parallel angeordneten Anschlüssen für die Sensoren/Aktoren und einem Anschluss für den Aggregatedatenbus ausgebildet, ein Signalkonverter ist zur Wandlung der Sensorsignale mehrerer Sensoren in das Datenbussignal vorgesehen, so dass bei Ausführungen der Vorrichtung mit unterschiedlichen Aggregatevarianten mit unterschiedlichen Sensoren/Aktoren das gleiche Steuergerät ohne hardwaremäßige Veränderung an dessen Sensor-/Aktor-Ankopplung einsetzbar ist. Der Signalkonverter wandelt weiterhin die Sensorsignale ohne Zwischenschaltung einer Berechnung entsprechend einem Steuer-/ Regelalgorithmus direkt in die Datenbussignale um und das Sensor-/Aktor-Interface ist für Serienverkehrsmittel mit mehreren Motor-/Getriebevarianten in mindestens zwei Ausführungsformen ausgebildet, wobei diese sich durch die Anzahl der vorgesehenen Sensor-Anschlüsse unterscheiden.

Der Aggregatedatenbus weist eine serielle Datenübertragung in digitaler Form mit echtzeitspezifischen Randbedingungen auf, wobei dieser elektrisch und optisch ausgeführt sein kann. Der Aggregatedatenbus lässt eine zeitsynchrone Datenübertragung der Sensorsignale zu. An dem Aggregatedatenbus sind die aggregatesspezifischen Sensor-Aktor-Interfaces angekoppelt. Ferner ist der Aggregatedatenbus mit einer standardisierten Datenbus-Sende-/Empfangseinheit der Steuergeräte verbunden.

Neben dem Aggregatedatenbus kann zwischen den Steuergeräten ein weiterer Fahrzeugdatenbus angeordnet sein, der in den Fahrzeuginnenraum geführt ist. Über den Fahrzeugdatenbus werden Nachrichten zwischen den Steuergeräten direkt ausgetauscht und es werden Signale von Aggregaten übertragen, die entfernt zum zu steuernden Aggregat angeordnet sind. Beispielsweise werden Signale von Abgas-Sensorik, Tankentlüftung u.a. zu dem Motorsteuergerät übertragen, dort in einem Regelalgorithmus verarbeitet und über den Aggregatedatenbus zum Sensor-Aktor-Interface im Motor und/oder Getriebe übertragen. Unter Datenbus wird in diesem Zusammenhang ein Medium verstanden, welches digitale Signale übertragen kann. Dabei können herkömmliche binäre High- oder Low-Signale bzw. auch eine Pulsweitenmodulation über den Datenbus ausgeführt werden.

Die Steuergeräte sind standardisiert ausgebildet, so dass mehrere Steuergeräte die gleiche Schnittstelle zum Aggregatedatenbus aufweisen. Der interne Aufbau der Steuergerät kann bzgl. Mikrorechner, Speicher und Gehäuse einheitlich ausgeführt sein. Dies hat den Vorteil, dass Steuer- und Regelalgorithmen durch Anwendungssoftware ausgeführt werden, wobei die Hardware der Steuergerät übereinstimmt. Dadurch ergibt sich ein erheblicher Kostenvorteil beim Aufbau komplexer Systeme.

Das vom Aggregat, d.h. Motor und/oder Getriebe, entfernt angeordnete Steuergerät, umfasst jeweils einen leistungsfähigen Mikrorechner und die entsprechende Software, wobei diese aus einzelnen Softwaremodulen aufgebaut sein kann. Jedem alternativen Getriebe bzw. Motortyp wird dann ein angepasstes Softwaremodul zugeordnet. Nach dem Aufspielen der Software auf das Steuergerät führt diese die Steuerungs-/Regelungsalgorithmen für die Motor-Getriebeeinheit durch. Über eine Datenbusleitung ist das vom Aggregat entfernt angeordnete Steuergerät mit dem Sensor-/Aktor-Interface elektrisch leitend verbunden. Im Steuergerät sowie im Sensor-/Aktor-Interface werden die Datenbussignale durch den Signalkonverter zerlegt und die einzelnen Bestandteile werden den verschiedenen Sensoren und Aktoren zugeordnet. Ferner werden im Sensor-/Aktor-Interface die einzelnen Signale gewandelt, so dass diese einerseits als Analogsignale die im Getriebe oder Motor angeordnete Aktoren steuern können und andererseits werden die Sensorsignale in umgekehrter Richtung digitalisiert und in die Datenbussignale umgewandelt, so dass diese im entfernt angeordneten Steuergerät weiterverarbeitet werden können.

Bei einer Weiterbildung der Erfindung ist die Einheit als aggregatespezifisches Sensor-/Aktor-Interface mit mehreren parallel angeordneten Anschlüssen für die Sensoren/Aktoren und einem Anschluss für den Aggregatedatenbus ausgebildet, ein Signalkonverter ist zur Wandlung der Sensorsignale mehrerer Sensoren in das Datenbussignal vorgesehen, so dass bei Ausführungen der Vorrichtung mit unterschiedlichen Aggregatevarianten mit unterschiedlichen Sensoren/Aktoren das gleiche Steuergerät ohne hardwaremäßige Veränderung an dessen Sensor-/Aktor-Ankopplung einsetzbar ist, und ein Steuergerät ist in das Gehäuse des Wählhebels für die Gang- oder Automatikschaltung integriert.

Bei einer Weiterbildung der Erfindung sind mehrere aggregateunabhängige Standardsteuergeräte mit standardisierten Schnittstellen zum Sensor-Aktor-Interface und zur restlichen Fahrzeugumgebung vorgesehen. Dabei werden die aggregatespezifischen Umfänge ins Sensor-Aktor-Interface ausgelagert. Die aggregateunabhängigen Umfänge sind dem standardisierten Aggregatesteuergerät zugeordnet. Sensor-Aktor-Interface und Aggregatesteuergerät sind über eine standardisierte Schnittstelle, d.h. über die Datenbus-Sende-/Empfangseinheit, miteinander verbunden. Das aggregatespezifische Sensor-Aktor-Interface stellt bevorzugt eine Signalwandlung, eine Signalvorbereitung, insbesondere eine Aktor-nahe Regelung bis hin zu z.B. Motorgrundfunktionen für die Darstellung von Notlauffunktionalitäten zur Verfügung.

Am Sensor-/Aktor-Interface sind Anschlüsse für Sensoren wie Motordrehzahl, Kurbelwellendrehzahl oder Getriebetemperatur und Anschlüsse für Aktoren wie Einspritzventile, Zündspulen und Schaltventile vorgesehen. Pedalwertgeber, eine Ladersonde, ein Abgastemperatursensor und Anschlüsse für Aktoren wie Kupplungsschalter, Starterrelais, Kraftstoffpumpen oder Tankentlüftungsventile sind entweder direkt an ein Steuergerät angekoppelt oder über eine Sensor-Aktor-Interface an einen Fahrzeugdatenbus angekoppelt. An das Sensor-/Aktor-Interface werden die aggregatespezifischen Sensoren und Aktoren angeschlossen. Bezogen auf den Motor können auch Sensoren wie ein Klopfsensor, ein Kurbel-/Nockenwellen-Drehzahlsensor, ein Luftmassenmesser und Aktoren wie Drossel-, Drall- und Abgasklappen, Zündspulen und Einspritzventile vorgesehen sein. Das Sensor-/Aktor-Interface ist direkt am Aggregat, d.h. am Getriebe oder am Motor angeordnet. Die Sensoren sind außen oder innen am Aggregat vorgesehen.

Das Sensor-/Aktor-Interface ist quasi ein Verteiler zwischen den verschiedenen Sensoren und Aktoren und wandelt die erfassten Signale in Datenbussignale um, so dass die Signale sequentiell, d.h. in einem Zeitmultiplexverfahren oder parallel in einem Frequenzmultiplexverfahren über den Datenbus übertragen werden können. Außer der Signalerfassung und der Aktoransteuerung kann das Sensor-/Aktor-Interface noch eine Signalvorverarbeitung und eine Speicherung von Adaptionsparametern durchführen. Das Sensor-/Aktor-Interface führt jedoch keine Steuer-/Regelalgorithmen-Berechnungen durch, sondern überträgt die Sensor- und Aktorsignale lediglich über den Aggregatedatenbus zum entfernt angeordneten Steuergerät, wo dann die komplexen Steueralgorithmen durchgeführt werden.

Der entscheidende Vorteil der vorliegenden Erfindung besteht darin, dass bei unterschiedlichen Aggregatevarianten, beispielsweise Benzin oder Dieselmotoren mit verschiedenen Zylinderzahlen, unterschiedlichen Getrieben mit unterschiedlichen Gängen und sich unterscheidenden Kupplungen lediglich das Sensor-/Aktor-Interface angepasst werden muss. Das entfernt angeordneten Steuergerät kann in seiner Hardware im wesentlichen unverändert bleiben, wobei lediglich andere Softwaremodule auf das Steuergerät aufgespielt werden müssen.

Bei einer höheren Anzahl von Sensoren wird dann ein Sensor-/Aktor-Interface mit einer höheren Anzahl von Anschlüssen vorgesehen, wobei das Datenbusprotokoll unverändert bleibt, so dass lediglich eine höhere Anzahl von Nachrichten über den Aggregatedatenbus übertragen wird. Infolgedessen kann für eine vorgegebene Anzahl von Aggregatevarianten ein Einheitssteuergerät vorgesehen sein. Dies führt im Bereich der Kraftfahrzeug- oder auch Flugzeugherstellung zu dem erheblichen Vorteil, dass nicht für jede Aggregatevariante ein neues Steuergerät produziert werden muss. Es wird lediglich das Sensor-/Aktor-Interface, sozusagen der Adapter oder Vielfachstecker, für die Sensoren und Aktoren geändert. Die aufwendigen Mikrorechner mit den Regel- und Steueralgorithmen sind im Sensor-/Aktor-Interface nicht vorgesehen und müssen demnach auch nicht unter hohem Aufwand angepasst werden.

Durch die Trennung von Steuergerät als Regel- und Steuereinheit und dem Sensor-/Aktor-Interface für die aggregatespezifische Sensorik und Aktuatorik kann das Steuergerät mit den hochintegrierten Halbleitern, wie Mikrorechnern und Speichern, im Fahrzeug an einem bezüglich Umwelteinflüssen weniger belasteten Einbauort, z.B. im Beifahrerfußraum platziert werden. Dadurch ergeben sich bei den hochintegrierten Halbleitern Kosten- und Qualitätsvorteile gegenüber der derzeitigen Lösung, wo ein Steuergerät mit Mikrorechner direkt am Aggregat angebaut wird.

Das Sensor-/Aktor-Interface lässt sich unter Kosten- und Qualitätsgesichtspunkten problemlos für die rauen Betriebbedingungen im Motorraum und am Aggregat auslegen. Das Sensor-/Aktor-Interface kann mit wenigen Leiterplattenlagen, einfacheren Keramiksubstraten wie Dickschichtkeramik, Al₂O₃ und weniger komplexen Bausteinen ausgeführt werden, als dies bei den bisher verwendeten Steuergeräten am Aggregat der Fall ist. Die geringere Komplexität des Sensor-/Aktor-Interfaces ermöglicht eine bessere Ableitung der Verlustwärme, insbesondere von den Leistungshalbleitern und höheren zulässigen Betriebstemperaturen, sowie eine verbesserte Robustheit gegenüber Umwelteinflüssen.

Darüber hinaus kann im Sensor-/Aktor-Interface auch eine geringe Anzahl von Sensoren und Aktoren bereits integriert sein. Durch die höhere Robustheit des Sensor-/Aktor-Interfaces gegenüber einem Steuergerät ergeben sich mehr Freiräume bei der Platzierung der Sensoren und Aktoren am Aggregat selbst. Das Sensor-/Aktor-Interface kann daher zu einer bezüglich des Aggregatekabelsatzes optimierten Platzierung genutzt werden.

Das Sensor-/Aktor-Interface weist ein Speichermittel auf, in dem die digitalen Sensorsignale zwischenspeicherbar sind, wo die Sensorsignale hinsichtlich des vorgegebenen Wertebereichs und/oder einer Normierung der Signale auf einen vorgegebenen Zahlenbereich umgewandelt werden und wobei die Datenbus-Sende-/Empfangseinheit die digitalen Sensorsignale aus dem Speichermittel ausliest und in Datenbussignale wandelt, die dann über den Aggregatedatenbus zum Steuergerät übertragbar sind. Die Umwandlung in die Datenbussignale am Sensor-/Aktor-Interface kann beispielsweise in die bekannten Datenbus-Protokolle, beispielsweise CAN, LIN, Firewire, Bluetooth, USB, Pulsweitenmodulation und auch weitere aufmodulierte Signale wie Frequenz- oder Amplitudenmodulation erfolgen. Zur Umrechnung in den vorgegebenen Wertebereich bzw. zur Diagnose, ob der Sensor oder Aktor seine Funktion ausführt, kann ein sehr kleiner robuster Mikrorechner vorgesehen sein, so dass bei Ausfall des Steuergerätes oder bei Schnittstellenproblemen die Sicherheit und Verfügbarkeit der Sensor- und Aktor-Signalübertragung, dann beispielsweise über einen Notübertragungspfad gewährleistet ist. Das Sensor-/Aktor-Interface unterscheidet sich aber auch von den in Anbaulösung vorgesehenen Steuergeräten dadurch, dass keine Steuer- und Regelalgorithmen für die Sensoren und Aktoren vorgesehen sind. Für eine besonders schnelle Wandlung der Sensorsignale in Datenbussignale kann eine reine Hardwarelösung vorgesehen sein.

Bei einer besonders bevorzugten Weiterbildung des Sensor-/Aktor-Interfaces für Serienverkehrsmittel, wie Schiffe, Flugzeuge und Kraftfahrzeuge, sind diese jeweils in mindestens zwei Ausführungsformen ausgebildet, wobei jedes sich durch die Anzahl der vorgesehenen Sensor-/Aktor-Anschlüsse unterscheidet. Bei bestimmten Serienverkehrsmitteln müssen nicht alle Anschlüsse des Sensor-/Aktor-Interfaces belegt sein, sondern das Sensor-/Aktor-Interface ist so ausgestaltet, dass es auch bei fehlender Belegung bestimmter Anschlüsse einsatzfähig ist. Dadurch entsteht eine sehr geringe Variantenvielfalt bezüglich der Sensor-/Aktor-Interfaces und der zugehörigen Steuergeräte, obwohl eine Vielzahl von verschiedenen Aggregatevarianten vorgesehen sein kann. Es müssen dann am Steuergerät nicht jedes Mal neue Anschlüsse für neue Sensoren und Aktoren vorgesehen sein, sondern lediglich für jede Variante ein Datenbusanschluss zum Sensor-/Aktor-Interface. Die Variantenvielfalt schlägt sich dann im Endeffekt auf die zu übertragenden Datenbusnachrichten nieder. Die einzelnen Sensorsignale werden meist sequentiell durch ein asynchrones oder synchrones Datenbusprotokoll zum Steuergerät übertragen und dort in ihrer zeitlichen Reihenfolge ausgewertet. Vom Steuergerät werden dann die Regelalgorithmen angewandt und die Steuersignale für die Aktoren werden wieder über den Aggregatedatenbus zum Sensor-/Aktor-Interface übertragen und dort so gewandelt, dass die Aktoren angesteuert werden können.

Es können auch mehrere Sensor-/Aktor-Interfaces parallel oder in Kaskaden geschaltet werden, so dass ein Sensor-/Aktor-Interface am Motor und ein Sensor-/Aktor-Interface am Getriebe angeordnet sein kann. Das Steuergerät kann dann beispielsweise zwei Datenbusanschlüsse aufweisen, die mit den unterschiedlichen Sensor-/Aktor-Interfaces elektrisch leitend verbunden sind.

Bei einer anderen Weiterbildung der Erfindung ist das Getriebesteuergerät in das Gehäuse des Automatik- oder Gang-Wählhebels des Verkehrsmittels integriert. Gegebenenfalls kann die komplette Getriebesteuerung einschließlich eines Sensor-Aktor-Interface in den Wählhebel integriert werden. Dies macht insbesondere bei heckgetriebenen Fahrzeugen einen Sinn, wegen der unmittelbaren Nähe von Getriebe und Wählhebel.

Die Vorrichtung zum Steuern kann auch im Zusammenhang mit Aggregaten wie Kupplungen, Startergeneratoren oder auch Antrieben im Bereich der Nutzfahrzeugtechnik, Schiffs- oder Flugzeugtechnik eingesetzt werden. Außerdem kann das Sensor-/Aktor-Interface gemäß der vorliegenden Erfindung auch bei Hybridfahrzeugen oder Wasserstofffahrzeugen einsetzbar sein.

Ein weiterer Vorteil der vorliegenden Erfindung besteht darin, dass eine Diagnose oder Testphase, beispielsweise bei der Fahrzeugherstellung, vereinfacht wird. Das Sensor-/Aktor-Interface kann anstatt an dem Steuergerät angekoppelt zu sein, an einem Diagnose- oder Testgerät direkt angekoppelt werden, welches das Steuergerät in verschiedenen Testphasen nachbildet. Insbesondere können Werkstatt- und Prüfstandsrechner am Produktionsband an den Sensor-Aktor-Interfaces oder am Aggregatedatenbus angekoppelt werden. Alternativ lässt sich ein sogenanntes Hardwarein-the-Loop-Verfahren durchführen. Das Sensor-/Aktor-Interface ermöglicht eine einfache Ankopplung der Testgeräte, die dann die notwendigen Testsignale für den Testbetrieb bereitstellen. Es wird dann beispielsweise ein Testbetrieb für die Sensoren und Aktoren simuliert, ohne dass das Fahrzeugsteuergerät angekoppelt ist. Das Steuergerät und das Sensor-/Aktor-Interface können von verschiedenen Herstellern geliefert werden. Dies ermöglicht wiederum ein modulares Konzept, was den Einsatz von Ersatzteilen vereinfacht.

Erfindungsgemäß ist auch ein Testverfahren für die Vorrichtung am Bandende der Aggregatefertigung vorgesehen. Dabei wird das Aggregatesteuergerät (z.B. Motor- oder Getriebesteuergerät) durch einen leistungsfähigen Prüfstandrechner ersetzt und es werden komplexe Tests in kurzen Zeitintervallen durchgeführt, die ein Aggregatesteuergerät aufgrund von begrenzter Rechenleistung und begrenztem Speicherplatz nicht leisten kann. Das Prüfverfahren kann dadurch in die Bandlaufintervalle integriert werden. Des Weiteren kann im Aggregatesteuergerät auf das Bandende-Testprogrämm verzichtet und somit der Programmspeicherbedarf reduziert werden. Es sind lediglich die Testprogramme für die Onboard- oder Laufzeit-Diagnose im Aggregatesteuergerät vorhanden.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. In der Zeichnung ist eine Ausführungsform der erfindungsgemäßen Vorrichtung zur Simulation dargestellt.
Fig. 1 zeigt eine Darstellung einer kombinierten Motor- und Getriebesteuerung mit zwei erfindungsgemäßen Sensor-/Aktor-Interfaces und zwei jeweils entfernt zum Aggregat angeordneten Steuergeräten und
Fig. 2 zeigt eine Darstellung der erfindungsgemäßen Vorrichtung gemäß einer weiteren Ausführungsform.

Die Vorrichtung zum Steuern eines Motors 1 und eines Getriebes 2 weist jeweils ein davon entfernt angeordnetes Motorsteuergerät 3 und Getriebesteuergerät 4 auf, wobei die Steuergeräte 3, 4 jeweils die Steuer- bzw. Regelalgorithmen für das jeweilige Aggregat vorsehen. Das Motorsteuergerät 3 ist mit dem Getriebesteuergerät 4 über einen Fahrzeugdatenbus 5, beispielsweise einem CAN-Fahrzeugbus elektrisch leitend verbunden. Über den Fahrzeugdatenbus 5 werden Nachrichten ausgetauscht, die beispielsweise Informationen von fahrzeugspezifischen Sensoren 6 bzw. Steuersignale der Steuergeräte 3, 4 für die Aktoren 7 betreffen. Das Motorsteuergerät 3 ist über einen Aggregatedatenbus 8 mit dem Sensor-/Aktor-Interface 9 verbunden, dass am Motor 1 befestigt ist. Als Schnittstelle weist sowohl das Motorsteuergerät 3 als auch das Sensor-/Aktor-Interface 9 jeweils eine Datenbus-Sende-/Empfangseinheit 10 und 11 auf. Über diese Datenbus-Sende-/Empfangseinheiten 10, 11 werden Datenbussignale bidirektional vom Sensor-/Aktor-Interface 9 zum Motorsteuergerät 3 und umgekehrt übertragen.

Im Sensor-/Aktor-Interface 9 werden die digitalen Datenbussignale abgespeichert und jeweils dem betreffenden motorseitigen Sensor 12 oder motorseitigem Aktor 13 zugeordnet. Die im Speichermittel des Sensor-/Aktor-Interface 9 abgelegten, digitalen Daten werden dann bei Bedarf digital/analog-gewandelt und an die Sensoren 12 und Aktoren 13 am und im Motor 1 übertragen. Das Sensor-/Aktor-Interface 9 wandelt dabei lediglich die Signale der Sensoren und Aktoren 12, 13 in die Datenbussignale für den Aggregatedatenbus 8 um und diese gewandelten Signale der motorspezifischen Sensoren 12 und Aktoren 13 werden dann im Motorsteuergerät 3 entsprechend umgesetzt, so dass die Signale im Steuer- und Regelalgorithmus des Motorsteuergerätes 3 verarbeitet werden können, um den Motor 1 bei der gewünschten Leistung oder einer gewünschten Funktion zu betreiben.

Das Getriebesteuergerät 4 ist entfernt vom Getriebe 2 angeordnet und im Fahrzeuginnenraum beim Automatikwählhebel 14 oder bei einer Gangschaltung angeordnet. Das Getriebesteuergerät 4 ist dazu innerhalb eines gekapselten Gehäuses angeordnet, welches die Elektronik und mechanischen Komponenten des Automatikwählhebel 14 umschließt. Andererseits kann das Getriebesteuergerät 4 in der Nähe des Automatikwählhebel 14 angeordnet sein. Steuersignale des Getriebesteuergerätes 4 werden in einer Datenbus-Sende-/Empfangseinheit 15 und in einer Datenbus-Sende-/Empfangseinheit 16 des Sensor-/Aktor-Interfaces 17 jeweils in die Datenbussignale und wieder zurück in digitale Signale umgewandelt. Die digitalen Signale werden im Speichermittel des Sensor-/Aktor-Interfaces 17 abgespeichert und gegebenenfalls wieder über D/A-Wandler in Signale umgesetzt, die über die verschiedenen Anschlüsse des Sensor-/Aktor-Interfaces 17 an die getriebespezifischen Sensoren 18 und die getriebespezifischen Aktoren 19 übertragen werden können.

Das Sensor-/Aktor-Interface 9 bzw. 17 wandelt die Sensor- und Aktor-Signale in die entsprechenden Datenbussignale für den Aggregatedatenbus 8, 20 um und es werden gegebenenfalls die Wertebereiche überprüft und die Signalwerte auf einen speziellen Sensorwertbereich normiert. Die eigentlichen Steuerungs- und Regelungsberechnungen werden jeweils in den Steuergeräten 3, 4 durchgeführt.

Die fahrzeugspezifischen Sensoren und Aktoren 6, 7 können beispielsweise Bedienelemente für Motor und Getriebe aber auch Telematikfunktionen sein, die in irgend einer Form einen Einfluss für die Motor und Getriebesteuerungen haben. Die auf die Bedienelementevorwahl bezogenen Berechnungsfunktionen werden dann in den Steuergeräten 3, 4 durchgeführt und die komplexe Mikroelektronik befindet sich dadurch entfernt von dem jeweiligen Aggregat 1, 2. Die Steuergeräte können außerhalb des Motorraums beispielsweise im Fahrzeuginnenraum angeordnet werden, da auch in Bezug auf Sensoren und Aktoren ein sehr geringer Verkabelungsaufwand vorhanden ist. Der Aggregatedatenbus 8 bzw. 20 kann neben den Signalleitungen für die Sensorsignale auch eine Leistungs- oder Spannungsversorgungsleitung haben, um die einzelnen Sensoren und Aktoren mit Strom zu versorgen. Die Aktoren können aber auch unabhängig vom Aggregatedatenbus 8, 20 mit Strom versorgt werden.

Die Getriebesteuerung für die unterschiedlichen Getriebearten, automatisiertes Schaltgetriebe, Wandelautomatikgetriebe oder CVT-Getriebe unterscheiden sich in erster Linie in Bezug auf die Sensoren und Aktoren. Die eigentliche Steuerungsfunktion für alle Getriebe wird durch Softwaremodule durchgeführt, wobei jedem Getriebe ein bestimmtes Modul zuordenbar ist und die Software jeweils für das Getriebe aus einzelnen Bibliotheksfunktionen zusammengestellt werden kann. Durch die erfindungsgemäße Anordnung von Sensor-/Aktor-Interfaces 9, 17 kann die Steuergeräte-Hardware auch bei unterschiedlichen Motoren-/Getriebevarianten beibehalten werden und es wird lediglich das weniger komplexe und als integrierte Halbleiterkomponente ausgeführte Sensor-/Aktor-Interface 9, 17 ausgetauscht.

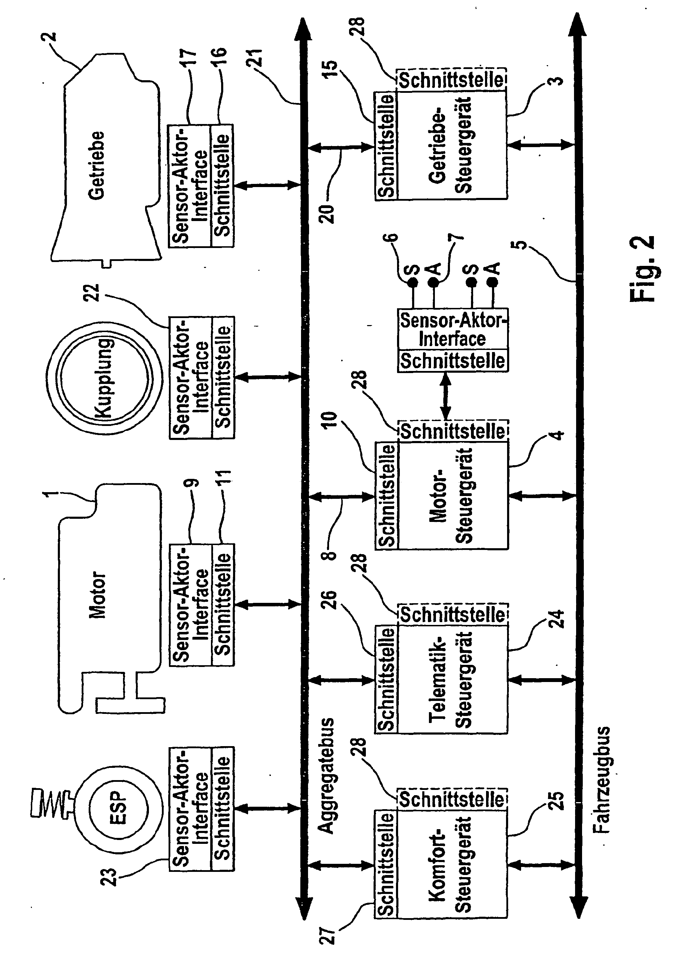

Bei einer anderen Ausführungsform der Erfindung gemäß Fig. 2 verbindet ein zum Fahrzeugdatenbus 5 separater Aggregatedatenbus 21 mehrere Sensor-Aktor-Interfaces 9, 17, 22, 23 miteinander. Dadurch ist ein einheitlicher Informationsaustausch zwischen den Sensor-Aktor-Interfaces 9, 17, 22, 23 und allen Aggregatesteuergeräte 3, 4, 24, 25 möglich. Dies hat den Vorteil, dass z.B. das Getriebesteuergerät 3 direkt auf den Rohwert der Motordrehzahl vom Sensor-Aktor-Interface 9 am Motor 1 zugreifen und das Signal nach Getriebe-spezifischen Erfordernissen auswerten, auflösen oder filtern kann. Die Gateway-Funktionalität für solche Signale, d.h. der Aufwand für die Weiterleitung von Signalen vom Aggregatedatenbus 21 auf den Fahrzeugdatenbus 5 wird in den Aggregatesteuergeräten 3, 4, 24, 25 deutlich reduziert.

Da dann alle Aggregatesteuergeräte 3, 4, 24, 25 mit allen Sensor-Aktor-Interfaces 9, 17, 22, 23 kommunizieren können, kann bei Ausfall eines Aggregatesteuergerätes 3, 4, 24, 25 die Grundfunktionalität von einem anderen Aggregatesteuergerät 3, 4, 24, 25 übernommen werden, z.B. kann bei Ausfall des Getriebesteuergerätes 3 das Motorsteuergerät 4 ein Grundschaltprogramm bereitstellen. Dies bedeutet, dass durch die erfindungsgemäße Anordnung eine Steuergerätestruktur entsteht, die sich zu Redundanzzwecken nutzen lässt. Sind auch auf beim Sensor-Aktor-Interface 9, 17, 22, 23 Redundanzen erforderlich, so beschränkt sich der Aufwand auf das Sensor-Aktor-Interface 9, 17, 22, 23, d.h. es muss nicht die gesamte Getriebeelektronik redundant ausgelegt werden.

In Figur 2 ist eine Ausführungsform mit einem Aggregatedatenbus 21 gezeigt, der die einzelnen Sensor-Aktor-Interfaces 9, 17, 22, 23 miteinander verbindet. Der Aggregatedatenbus 21 ist zusätzlich mit mehreren standardisierten Steuergeräten 3, 4, 24, 25 verbunden, deren Hardware im Wesentlich gleich ist und die sich in Bezug auf deren Funktionalität durch die Regelungs- und Steuersoftware unterscheiden. Die Steuergeräte 3, 4, 24, 25 sind jeweils über eine einheitliche Datenbus-Sende-/Empfangseinheit 10, 15, 26, 27 am Aggregatedatenbus 21 angekoppelt. Wie bisher im Kraftfahrzeug üblich sind die Steuergeräte 3, 4, 24, 25 untereinander über den Fahrzeugdatenbus 5 vernetzt. Jedes Steuergerät 3, 4, 24, 25 kann noch eine Schnittstelle 28 aufweisen, wo Sensoren und Aktoren direkt am Steuergerät 3, 4, 24, 25 angekoppelt werden können. Diese Schnittstelle 28 wird für Sensoren/Aktoren 6, 7 verwendet, die nahe am Steuergerät 3, 4, 24, 25 angeordnet sind und bei jeder Aggregatevariante erforderlich sind, so dass die Schnittstelle 28 bei allen Kraftfahrzeug-Varianten einheitlich vorgesehen sein kann.

Starterrelais, Kraftstoffpumpen oder Tankentlüftungsventile sind entweder direkt an ein Steuergerät angekoppelt oder über eine Sensor-Aktor-Interface an einen Fahrzeugdatenbus angekoppelt. An das Sensor-/Aktor-Interface werden die aggregatespezifischen Sensoren und Aktoren angeschlossen. Bezogen auf den Motor können auch Sensoren wie ein Klopfsensor, ein Kurbel-/Nockenwellen-Drehzahlsensor, ein Luftmassenmesser und Aktoren wie Drosael-, Drall- und Abgasklappen, Zündspulen und Einspritzventile vorgesehen sein. Das Sensor-/Aktor-Interface ist direkt am Aggregat, d.h. am Getriebe oder am Motor angeordnet. Die Sensoren sind außen oder innen am Aggregat vorgesehen.

Das Sensor-/Aktor-Interface ist quasi ein Verteiler zwischen den verschiedenen Sensoren und Aktoren und wandelt die erfassten Signale in Datenbuasignale um, so dass die Signale sequentiell, d.h. in einem Zeitmultiplexverfahren oder parallel in einem Frequenzmultiplexverfahren über den Datenbus übertragen werden können. Außer der Signalerfassung und der Aktoransteuerung kann das Sensor-/Aktor-Interface noch eine Signalvorverarbeitung und eine Speicherung von Adaptionsparametern durchführen. Das Sensor-/Aktor-Interface führt jedoch keine Steuer-/Regelalgorithmen-Berechnungen durch, sondern überträgt die Sensor- und Aktorsignale lediglich über den Aggregatedatenbus zum entfernt angeordneten Steuergerät, wo dann die komplexen Steueralgorithmen durchgeführt werden.

Der entscheidende vorteil der vorliegenden Erfindung besteht darin, dass bei unterschiedlichen Aggregatevärianten, beispielsweise Benzin oder Dieselmotoren mit verschiedenen Zylinderzahlen, unterschiedlichen Getrieben mit unterschiedlichen Gängen und sich unterscheidenden Kupplungen lediglich das Sensor-/Aktor-Interface angepasst werden muss. Das entfernt angeordneten Steuergerät kann in seiner Hardware im wesentlichen unverändert bleiben, wobei lediglich andere Softwaremodule auf das Steuergerät aufgespielt werden müssen.

Bei einer höheren Anzahl von Sensoren wird dann ein Sensor-/Aktor-Interface mit einer höheren Anzahl von Anschlüssen vorgesehen, wobei das Datenbusprotokoll unverändert bleibt, so dass lediglich eine höhere Anzahl von Nachrichten über den Aggregatedatenbus übertragen wird. Infolgedessen kann für eine vorgegebene Anzahl von Aggregatevarianten ein Einheitssteuergerät vorgesehen sein. Dies führt im Bereich der Kraftfahrzeug- oder auch Flugzeugherstellung zu dem erheblichen Vorteil, dass nicht für jede Aggregatevariante ein neues Steuergerät produziert werden muss. Es wird lediglich das Sensor-/Aktor-Interface, sozusagen der Adapter oder Vielfachstecker, für die Sensoren und Aktoren geändert. Die aufwendigen Mikrorechner mit den Regel- und Steueralgorithmen sind im Sensor-/Aktor-Interface nicht vorgesehen und müssen demnach auch nicht unter hohem Aufwand angepasst werden.

Durch die Trennung von Steuergerät als Regel- und Steuereinheit und dem Sensor-/Aktor-Interface für die aggregatespezifische Sensorik und Aktuatorik kann das Steuergerät mit den hochintegrierten Halbleitern, wie Mikrorechnern und Speichern, im Fahrzeug an einem bezüglich Umwelteinflüssen weniger belasteten Einbauort, z.B. im Beifahrerfußraum platziert werden. Dadurch ergeben sich bei den hochintegrierten Halbleitern Kosten- und Qualitätsvorteile gegenüber der derzeitigen Lösung, wo ein Steuergerät mit Mikrorechner direkt am Aggregat angebaut wird.

Das Sensor-/Aktor-Interface lässt sich unter Kosten- und Qualitätsgesichtspunkten problemlos für die rauen Betriebbedingungen im Motorraum und am Aggregat auslegen. Das Sensor-/Aktor-Interface kann mit wenigen Leiterplattenlagen, einfacheren Keramiksubstraten wie Dickschichtkeramik, Al₂O₃ und weniger komplexen Bausteinen ausgeführt werden, als dies bei den bisher verwendeten Steuergeräten am Aggregat der Fall ist. Die geringere Komplexität des Sensor-/Aktor-Interfaces ermöglicht eine bessere Ableitung der Verlustwärme, insbesondere von den Leistungshalbleitern und höheren zulässigen Betriebstemperaturen, sowie eine verbesserte Robustheit gegenüber Umwelteinflüssen. Darüber hinaus kann im Sensor-/Aktor-Interface auch eine geringe Anzahl von Sensoren und Aktoren bereits integriert sein. Durch die höhere Robustheit des Sensor-/Aktor-Interfaces gegenüber einem Steuergerät ergeben sich mehr Freiräume bei der Platzierung der Sensoren und Aktoren am Aggregat selbst. Das Sensor-/Aktor-Interface kann daher zu einer bezüglich des Aggregatekabelsatzes optimierten Platzierung genutzt werden.

Das Sensor-/Aktor-Interface weist ein Speichermittel auf, in dem die digitalen Sensorsignale zwischenspeicherbar sind, wo die Sensorsignale hinsichtlich des vorgegebenen Wertebereichs und/oder einer Normierung der Signale auf einen vorgegebenen Zahlenbereich umgewandelt werden und wobei die Datenbus-Sende-/Empfangseinheit die digitalen Sensorsignale aus dem Speichermittel ausliest und in Datenbussignale wandelt, die dann über den Aggregatedatenbus zum Steuergerät übertragbar sind. Die Umwandlung in die Datenbussignale am Sensor-/Aktor-Interface kann beispielsweise in die bekannten Datenbus-Protokolle, beispielsweise CAN, LIN, Firewire, Bluetooth, USB, Pulsweitenmodulation und auch weitere aufmodulierte Signale wie Frequenz- oder Amplitudenmodulation erfolgen. Zur Umrechnung in den vorgegebenen Wertebereich bzw. zur Diagnose, ob der Sensor oder Aktor seine Funktion ausführt, kann ein sehr kleiner robuster Mikrorechner vorgesehen sein, so dass bei Ausfall des Steuergerätes oder bei Schnittstellenproblemen die Sicherheit und Verfügbarkeit der Sensor- und Aktor-Signalübertragung, dann beispielsweise über einen Notübertragungspfad gewährleistet ist. Das Sensor-/Aktor-Interface unterscheidet sich aber auch von den in Anbaulösung vorgesehenen Steuergeräten dadurch, dass keine Steuer- und Regelalgorithmen für die Sensoren und Aktoren vorgesehen sind. Für eine besonders schnelle Wandlung der Sensorsignale in Datenbussignale kann eine reine Hardwarelösung vorgesehen sein.

Bei einer besonders bevorzugten Weiterbildung des Sensor-/Aktor-Interfaces für Serienverkehrsmittel, wie Schiffe, Flugzeuge und Kraftfahrzeuge, sind diese jeweils in mindestens zwei Ausführungsformen ausgebildet, wobei jedes sich durch die Anzahl der vorgesehenen Sensor-/Aktor-Anschlüsse unterscheidet. Bei bestimmten Serienverkehrsmitteln müssen nicht alle Anschlüsse des Sensor-/Aktor-Interfaces belegt sein, sondern das Sensor-/Aktor-Interface ist so ausgestaltet, dass es auch bei fehlender Belegung bestimmter Anschlüsse einsatzfähig ist. Dadurch entsteht eine sehr geringe Variantenvielfalt bezüglich der Sensor-/Aktor-Interfaces und der zugehörigen Steuergeräte, obwohl eine Vielzahl von verschiedenen Aggregatevarianten vorgesehen sein kann. Es müssen dann am Steuergerät nicht jedes Mal neue Anschlüsse für neue Sensoren und Aktoren vorgesehen sein, sondern lediglich für jede Variante ein Datenbusanschluss zum Sensor-/Aktor-Interface. Die Variantenvielfalt schlägt sich dann im Endeffekt auf die zu übertragenden Datenbusnachrichten nieder. Die einzelnen Sensorsignale werden meist sequentiell durch ein asynchrones oder synchrones Datenbusprotokoll zum Steuergerät übertragen und dort in ihrer zeitlichen Reihenfolge ausgewertet. Vom Steuergerät werden dann die Regelalgorithmen angewandt und die Steuersignale für die Aktoren werden wieder über den Aggregatedatenbus zum Sensor-/Aktor-Interface übertragen und dort so gewandelt, dass die Aktoren angesteuert werden können.

Es können auch mehrere Sensor-/Aktor-Interfaces parallel oder in Kaskaden geschaltet werden, so dass ein Sensor-/Aktor-Interface am Motor und ein Sensor-/Aktor-Interface am Getriebe angeordnet sein kann. Das Steuergerät kann dann beispielsweise zwei Datenbusanschlüsse aufweisen, die mit den unterschiedlichen Sensor-/Aktor-Interfaces elektrisch leitend verbunden sind.

Bei einer anderen Weiterbildung der Erfindung ist das Getriebesteuergerät in das Gehäuse des Automatik- oder Gang-Wählhebels des Verkehrsmittels integriert. Gegebenenfalls kann die komplette Getriebesteuerung einschließlich eines Sensor-Aktor-Interface in den Wählhebel integriert werden. Dies macht insbesondere bei heckgetriebenen Fahrzeugen einen Sinn, wegen der unmittelbaren Nähe von Getriebe und Wählhebel.

Die Vorrichtung zum Steuern kann auch im Zusammenhang mit Aggregaten wie Kupplungen, Startergeneratoren oder auch Antrieben im Bereich der Nutzfahrzeugtechnik, Schiffs- oder Flugzeugtechnik eingesetzt werden. Außerdem kann das Sensor-/Aktor-Interface gemäß der vorliegenden Erfindung auch bei Hybridfahrzeugen oder Wasserstofffahrzeugen einsetzbar sein.

Ein weiterer Vorteil der vorliegenden Erfindung besteht darin, dass eine Diagnose oder Testphase, beispielsweise bei der Fahrzeugherstellung, vereinfacht wird. Das Sensor-/Aktor-Interface kann anstatt an dem Steuergerät angekoppelt zu sein, an einem Diagnose- oder Testgerät direkt angekoppelt werden, welches das Steuergerät in verschiedenen Testphasen nachbildet. Insbesondere können Werkstatt- und Prüfstandsrechner am Produktionsband an den Sensor-Aktor-Interfaces oder am Aggregatedatenbus angekoppelt werden. Alternativ lässt sich ein sogenanntes Hardwarein-the-Loop-Verfahren durchführen. Das Sensor-/Aktor-Interface ermöglicht eine einfache Ankopplung der Testgeräte, die dann die notwendigen Testsignale für den Testbetrieb bereitstellen. Es wird dann beispielsweise ein Testbetrieb für die Sensoren und Aktoren simuliert, ohne dass das Fahrzeugsteuergerät angekoppelt ist. Das Steuergerät und das Sensor-/Aktor-Interface können von verschiedenen Herstellern geliefert werden. Dies ermöglicht wiederum ein modulares Konzept, was den Einsatz von Ersatzteilen vereinfacht.

Erfindungsgemäß ist auch ein Testverfahren für die Vorrichtung am Bandende der Aggregatefertigung vorgesehen. Dabei wird das Aggregatesteuergerät (z.B. Motor- oder Getriebesteuergerät) durch einen leistungsfähigen Prüfstandrechner ersetzt und es werden komplexe Tests in kurzen Zeitintervallen durchgeführt, die ein Aggregatesteuergerät aufgrund von begrenzter Rechenleistung und begrenztem Speicherplatz nicht leisten kann. Das Prüfverfahren kann dadurch in die Bandlaufintervalle integriert werden. Des Weiteren kann im Aggregatesteuergerät auf das Bandende-Testprogramm verzichtet und somit der Programmspeicherbedarf reduziert werden. Es sind lediglich die Testprogramme für die Onboard- oder Laufzeit-Diagnose im Aggregateateuergerät vorhanden.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. In der Zeichnung ist eine Ausführungsform der erfindungsgemäßen Vorrichtung zur Simulation dargestellt.

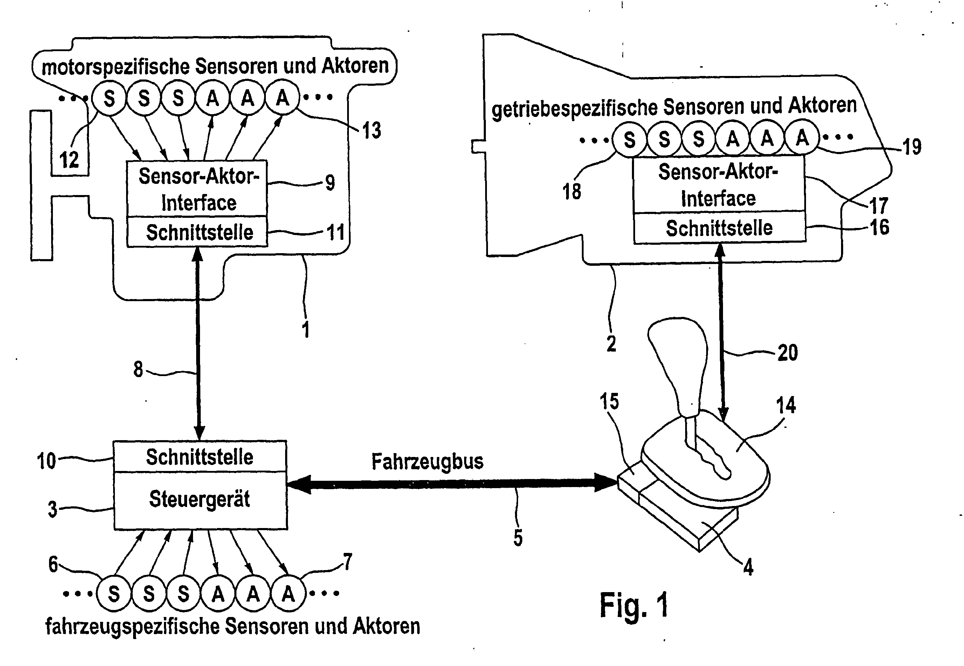

Fig. 1 zeigt eine Darstellung einer kombinierten Motor- und Getriebesteuerung mit zwei erfindungsgemäßen Sensor-/Aktor-Interfaces und zwei jeweils entfernt zum Aggregat angeordneten Steuergeräten und
Fig. 2 zeigt eine Darstellung der erfindungsgemäßen Vorrichtung gemäß einer weiteren Ausführungsform.

Die Vorrichtung zum Steuern eines Motors 1 und eines Getriebes 2 weist jeweils ein davon entfernt angeordnetes Motorsteuergerät 3 und Getriebesteuergerät 4 auf, wobei die Steuergeräte 3, 4 jeweils die Steuer- bzw. Regelalgorithmen für das jeweilige Aggregat vorsehen. Das Motorsteuergerät 3 ist mit dem Getriebesteuergerät 4 über einen Fahrzeugdatenbus 5, beispielsweise einem CAN-Fahrzeugbus elektrisch leitend verbunden. Über den Fahrzeugdatenbus 5 werden Nachrichten ausgetauscht, die beispielsweise Informationen von fahrzeugspezifischen Sensoren 6 bzw. Steuersignale der Steuergeräte 3, 4 für die Aktoren 7 betreffen. Das Motorsteuergerät 3 ist über einen Aggregatedatenbus 8 mit dem Sensor-/Aktor-Interface 9 verbunden, dass am Motor 1 befestigt ist. Als Schnittstelle weist sowohl das Motorsteuergerät 3 als auch das Sensor-/Aktor-Interface 9 jeweils eine Datenbus-Sende-/Empfangseinheit 10 und 11 auf. Über diese Datenbus-Sende-/Empfangseinheiten 10, 11 werden Datenbussignale bidirektional vom Sensor-/Aktor-Interface 9 zum Motorsteuergerät 3 und umgekehrt übertragen.

Im Sensor-/Aktor-Interface 9 werden die digitalen Datenbussignale abgespeichert und jeweils dem betreffenden motorseitigen Sensor 12 oder motorseitigem Aktor 13 zugeordnet. Die im Speichermittel des Sensor-/Aktor-Interface 9 abgelegten digitalen Daten werden dann bei Bedarf digital/analog-gewandelt und an die Sensoren 12 und Aktoren 13 am und im Motor 1 übertragen. Das Sensor-/Aktor-Interface 9 wandelt dabei lediglich die Signale der Sensoren und Aktoren 12, 13 in die Datenbussignale für den Aggregatedatenbus 8 um und diese gewandelten Signale der motorspezifischen Sensoren 12 und Aktoren 13 werden dann im Motorsteuergerät 3 entsprechend umgesetzt, so dass die Signale im Steuer- und Regelalgorithmus des Motorsteuergerätes 3 verarbeitet werden können, um den Motor 1 bei der gewünschten Leistung oder einer gewünschten Funktion zu betreiben.

Das Getriebesteuergerät 4 ist entfernt vom Getriebe 2 angeordnet und im Fahrzeuginnenraum beim Automatikwählhebel 14 oder bei einer Gangschaltung angeordnet. Das Getriebesteuergerät 4 ist dazu innerhalb eines gekapselten Gehäuses angeordnet, welches die Elektronik und mechanischen Komponenten des Automatikwählhebel 14 umschließt. Andererseits kann das Getriebesteuergerät 4 in der Nähe des Automatikwählhebel 14 angeordnet sein. Steuersignale des Getriebesteuergerätes 4 werden in einer Datenbus-Sende-/Empfangseinheit 15 und in einer Datenbus-Sende-/Empfangseinheit 16 des Sensor-/Aktor-Interfaces 17 jeweils in die Datenbussignale und wieder zurück in digitale Signale umgewandelt. Die digitalen Signale werden im Speichermittel des Sensor-/Aktor-Interfaces 17 abgespeichert und gegebenenfalls wieder über D/A-Wandler in Signale umgesetzt, die über die verschiedenen Anschlüsse des Sensor-/Aktor-Interfaces 17 an die getriebespezifischen Sensoren 18 und die getriebespezifischen Aktoren 19 übertragen werden können.

Das Sensor-/Aktor-Interface 9 bzw. 17 wandelt die Sensor- und Aktor-Signale in die entsprechenden Datenbussignale für den Aggregatedatenbus 8, 20 um und es werden gegebenenfalls die Wertebereiche überprüft und die Signalwerte auf einen speziellen Sensorwertbereich normiert. Die eigentlichen Steuerungs- und Regelungsberechnungen werden jeweils in den Steuergeräten 3, 4 durchgeführt.

Die fahrzeugspezifischen Sensoren und Aktoren 6, 7 können beispielsweise Bedienelemente für Motor und Getriebe aber auch Telematikfunktionen sein, die in irgend einer Form einen Einfluss für die Motor und Getriebesteuerungen haben. Die auf die Bedienelementevorwahl bezogenen Berechnungsfunktionen werden dann in den Steuergeräten 3, 4 durchgeführt und die komplexe Mikroelektronik befindet sich dadurch entfernt von dem jeweiligen Aggregat 1, 2. Die Steuergeräte können außerhalb des Motorraums beispielsweise im Fahrzeuginnenraum angeordnet werden, da auch in Bezug auf Sensoren und Aktoren ein sehr geringer Verkabelungsaufwand vorhanden ist. Der Aggregatedatenbus 8 bzw. 20 kann neben den Signalleitungen für die Sensorsignale auch eine Leistungs- oder Spannungsversorgungsleitung haben, um die einzelnen Sensoren und Aktoren mit Strom zu versorgen. Die Aktoren können aber auch unabhängig vom Aggregatedatenbus 8, 20 mit Strom versorgt werden.

Die Getriebesteuerung für die unterschiedlichen Getriebearten, automatisiertes Schaltgetriebe, Wandelautomatikgetriebe oder CVT-Getriebe unterscheiden sich in erster Linie in Bezug auf die Sensoren und Aktoren. Die eigentliche Steuerungsfunktion für alle Getriebe wird durch Softwaremodule durchgeführt, wobei jedem Getriebe ein bestimmtes Modul zuordenbar ist und die Software jeweils für das Getriebe aus einzelnen Bibliotheksfunktionen zusammengestellt werden kann. Durch die erfindungsgemäße Anordnung von Sensor-/Aktor-Interfaces 9, 17 kann die Steuergeräte-Hardware auch bei unterschiedlichen Motoren-/Getriebevarianten beibehalten werden und es wird lediglich das weniger komplexe und als integrierte Halbleiterkomponente ausgeführte Sensor-/Aktor-Interface 9, 17 ausgetauscht.

Bei einer anderen Ausführungsform der Erfindung gemäß Fig. 2 verbindet ein zum Fahrzeugdatenbus 5 separater Aggregatedatenbus 21 mehrere Sensor-Aktor-Interfaces 9, 17, 22, 23 miteinander. Dadurch ist ein einheitlicher Informationsaustausch zwischen den Sensor-Aktor-Interfaces 9, 17, 22, 23 und allen Aggregatesteuergeräte 3, 4, 24, 25 möglich. Dies hat den Vorteil, dass z.B. das Getriebesteuergerät 3 direkt auf den Rohwert der Motordrehzahl vom Sensor-Aktor-Interface 9 am Motor 1 zugreifen und das Signal nach Getriebe-spezifischen Erfordernissen auswerten, auflösen oder filtern kann. Die Gateway-Funktionalität für solche Signale, d.h. der Aufwand für die Weiterleitung von Signalen vom Aggregatedatenbus 21 auf den Fahrzeugdatenbus 5 wird in den Aggregatesteuergeräten 3, 4, 24, 25 deutlich reduziert.

Da dann alle Aggregatesteuergeräte 3, 4, 24, 25 mit allen Sensor-Aktor-Interfaces 9, 17, 22, 23 kommunizieren können, kann bei Ausfall eines Aggregatesteuergerätes 3, 4, 24, 25 die Grundfunktionalität von einem anderen Aggregatesteuergerät 3, 4, 24, 25 übernommen werden, z.B. kann bei Ausfall des Getriebesteuergerätes 3 das Motorsteuergerät 4 ein Grundschaltprogramm bereitstellen. Dies bedeutet, dass durch die erfindungsgemäße Anordnung eine Steuergerätestruktur entsteht, die sich zu Redundanzzwecken nutzen lässt. Sind auch auf beim Sensor-Aktor-Interface 9, 17, 22, 23 Redundanzen erforderlich, so beschränkt sich der Aufwand auf das Sensor-Aktor-Interface 9, 17, 22, 23, d.h. es muss nicht die gesamte Getriebeelektronik redundant ausgelegt werden.

In Figur 2 ist eine Ausführungsform mit einem Aggregatedatenbus 21 gezeigt, der die einzelnen Sensor-Aktor-Interfaces 9, 17, 22, 23 miteinander verbindet. Der Aggregatedatenbus 21 ist zusätzlich mit mehreren-standardisierten Steuergeräten 3, 4, 24, 25 verbunden, deren Hardware im Wesentlich gleich ist und die sich in Bezug auf deren Funktionalität durch die Regelungs- und Steuersoftware unterscheiden. Die Steuergeräte 3, 4, 24, 25 sind jeweils über eine einheitliche Datenbus-Sende-/Empfangseinheit 10, 15, 26, 27 am Aggregatedatenbus 21 angekoppelt. Wie bisher im Kraftfahrzeug üblich sind die Steuergeräte 3, 4, 24, 25 untereinander über den Fahrzeugdatenbus 5 vernetzt. Jedes Steuergerät 3, 4, 24, 25 kann noch eine Schnittstelle 28 aufweisen, wo Sensoren und Aktoren direkt am Steuergerät 3, 4, 24, 25 angekoppelt werden können. Diese Schnittstelle 28 wird für Sensoren/Aktoren 6, 7 verwendet, die nahe am Steuergerät 3, 4, 24, 25 angeordnet sind und bei jeder Aggregatevariante erforderlich sind, so dass die Schnittstelle 28 bei allen Kraftfahrzeug-Varianten einheitlich vorgesehen sein kann.

## Patentansprüche

1. Vorrichtung zum Steuern eines Motors (1) und/oder Getriebes (2) mit einem zum Motor/Getriebe (1, 2) entfernt angeordneten Steuergerät (3, 4, 24, 25), welches die Steuer- bzw. Regelalgorithmen vorsieht, und einer unmittelbar mit mehreren Sensoren (12, 18) elektrisch leitend verbundenen Einheit, die am Motor/Getriebe (1, 2) befestigt ist, wobei die Einheit einen A/D-Wandler zur Wandlung der von den Sensoren (12, 18) stammenden Sensorsignale in digitale Sensorsignale aufweist und die digitalen Sensorsignale durch einen Signalkonverter in Datenbussignale gewandelt und durch eine Datenbus-Sende-/Empfangseinheit (10, 11, 15, 16) auf einen Datenbus (5) eingekoppelt werden, um zwischen der Einheit und dem entfernt angeordneten Steuergerät (3, 4, 24, 25) über den Datenbus (5) kommunizierbar zu sein, **dadurch gekennzeichnet, dass** mehrere Steuergeräte (3, 4, 24, 25) mit einheitlicher Datenbus-Sende-/Empfangseinheit (10, 11, 15, 16) ausgeführt sind, an die jeweils ein Aggregatedatenbus (8, 20, 21) angekoppelt ist, dass die Einheit als aggregatespezifisches Sensor-/Aktor-Interface (9, 17, 22, 23) mit mehreren parallel angeordneten Anschlüssen für die Sensoren (12, 18) und einem Anschluss für den Aggregatedatenbus (8, 20, 21) ausgebildet ist, dass ein Signalkonverter zur Wandlung der digitalen Sensorsignale mehrerer Sensoren (12, 18) in das Datenbussignal vorgesehen ist, so dass bei Ausführungen der Vorrichtung für unterschiedlichen Aggregatevarianten mit unterschiedlichen Sensoren (12, 18) das gleiche Steuergerät (3, 4, 24, 25) ohne hardwaremäßige Veränderung an dessen Sensor-Ankopplung einsetzbar ist, dass der Signalkonverter ohne Zwischenschaltung einer Berechnung entsprechend einem Steuer-/ Regelalgorithmus die Sensorsignale direkt in die Datenbussignale umwandelt und dass das Sensor-/Aktor-Interface (9, 17, 22, 23) für Serienverkehrsmittel mit mehreren Motor-/Getriebevarianten in mindestens zwei Ausführungsformen ausgebildet ist, wobei diese sich durch die Anzahl der vorgesehenen Sensor-Anschlüsse unterscheiden.

2. Vorrichtung nach Anspruch 1, **dadurch gekennzeichnet, dass** am Sensor-/Aktor-Interface (9, 17, 22, 23) zusätzlich Aktoren (13, 19) ankoppelbar sind, wobei im Sensor-/Aktor-Interface (9, 17, 22, 23) die über den Aggregatedatenbus (8, 20, 21) eingehenden Steuerdaten für den oder die Aktoren (13, 19) in digitale Steuerdaten für den einzelnen Aktor (13 bzw. 19) gewandelt werden, so dass die Aktoren (13, 19) über die zugeordneten Sensor-/Aktor-Anschlüsse angesteuert werden können.

3. Vorrichtung nach Anspruch 1, **dadurch gekennzeichnet, dass** das Sensor-/Aktor-Interface (9, 17, 22, 23) eine Prüfung der Sensorsignale hinsichtlich des vorgegebenen Wertebereichs und/oder eine Normierung der Signale auf einen vorgegebenen Zahlenbereich durchführt.

4. Vorrichtung nach Anspruch 1 oder 2, **dadurch gekennzeichnet, dass** Sensor-/Aktor-Interface (9, 17, 22, 23) ein Speichermittel aufweist, in dem die digitalen Sensorsignale zwischenspeicherbar sind und dass die Datenbus-Sende-/Empfangseinheit (10, 11, 15, 16) die digitalen Sensorsignale aus dem Speichermittel ausliest und in Datenbussignale wandelt.

5. Vorrichtung nach einem der Ansprüche 1 bis 4, **dadurch gekennzeichnet, dass** bei Einsatz mit mehreren unterschiedlichen Ausführungen der Vorrichtung mit einer unterschiedlichen Zahl von Sensoren/Aktoren (12, 13, 18, 19) gegenüber dem entfernt angeordnetem Steuergerät (3, 4, 24, 25) dasselbe Datenbusprotokoll vorgesehen ist.

6. Vorrichtung nach einem der Ansprüche 1 bis 5, **dadurch gekennzeichnet, dass** bei bestimmten Serien-Verkehrsmitteln nicht alle Sensor-/Aktor-Anschlüsse des eingesetzten Sensor-/Aktor-Interface (9, 17, 22, 23) belegt sind.

## Claims

1. Device for controlling an engine (1) and/or transmission (2) having a control device (3, 4, 24, 25) which is arranged remotely from the engine/transmission (1, 2) and which provides the open-loop and closed-loop control algorithms, and a unit which is electrically conductively connected directly to a plurality of sensors (12, 18) and which is attached to the engine/transmission (1, 2), wherein the unit has an A/D converter for converting the sensor signals originating from the sensors (12, 18) into digital sensor signals, and the digital sensor signals are converted into data bus signals by means of a signal converter and fed into a data bus (5) by means of a data bus transceiver unit (10, 11, 15, 16) in order to be able to communicate via the data bus (5) between the unit and the control device (3, 4, 24, 25) which is arranged remotely therefrom, **characterized in that** a plurality of control devices (3, 4, 24, 25) are embodied with a uniform data bus transceiver unit (10, 11, 15, 16) to each of which an assembly data bus (8, 20, 21) is connected, **in that** the unit is embodied as an assembly-specific sensor/actuator interface (9, 17, 22, 23) with a plurality of parallel connections for the sensors (12, 18) and a connection for the assembly data bus (8, 20, 21), **in that** a signal converter is provided for converting the digital sensor signals of a plurality of sensors (12, 18) into the data bus signal so that in embodiments of the device for different assembly variants with different sensors (12, 18) the same control device (3, 4, 24, 25) can be used without hardware modification of its sensor connection, **in that** the signal converter converts the sensor signals directly into the data bus signals without intermediate connection of a calculating means corresponding to an open-loop/closed-loop control algorithm, and **in that** the sensor/actuator interface (9, 17, 22, 23) is designed for series traffic means with a plurality of engine/transmission variants in at least two embodiments which differ in the number of sensor connections provided.

2. Device according to Claim 1, **characterized in that** actuators (13, 19) can be additionally connected to the sensor/actuator interface (9, 17, 22, 23), wherein the control data which is input via the assembly data bus (8, 20, 21), for the actuator or actuators (13, 19) is converted into digital control data for the individual actuator (13 or 19) so that the actuators (13, 19) can be actuated via the assigned sensor/actuator connections.

3. Device according to Claim 1, **characterized in that** the sensor/actuator interface (9, 17, 22, 23) carries out checking of the sensor signals with respect to the predefined value range and/or standardization of the signals to a predefined numerical range.

4. Device according to Claim 1 or 2, **characterized in that** the sensor/actuator interface (9, 17, 22, 23) has a storage means in which the digital sensor signals can be buffered, and **in that** the data bus transceiver unit (10, 11, 15, 16) can read out the digital sensor signals from the storage means and converts them into data bus signals.

5. Device according to one of Claims 1 to 4, **characterized in that** the same data bus protocol is provided for use with a plurality of different embodiments of the device with a different number of sensors/actuators (12, 13, 18, 19) in comparison with the control device (3, 4, 24, 25) which is arranged remotely.

6. Device according to one of Claims 1 to 5, **characterized in that** for certain production vehicles some of the sensor/actuator connections of the sensor/actuator interface (9, 17, 22, 23) are not assigned.

## Revendications

1. Dispositif pour commander un moteur (1) et/ou une transmission (2) avec un appareil de commande (3, 4, 24, 25) disposé à distance du moteur/de la transmission qui prévoit les algorithmes de commande ou de réglage et une unité raccordée de manière électro-conductrice directement avec plusieurs capteurs (12, 18) qui est fixée sur le moteur/la transmission (1, 2), l'unité comportant un convertisseur A/N pour la conversion des signaux de capteurs provenant des capteurs (12, 18) en signaux numériques et les signaux de capteurs numériques étant convertis en signaux de bus de données par un convertisseur de signaux et couplés sur un bus de données (5) par une unité d'émission/de réception de bus de données (10, 11, 15, 16) pour pouvoir être communiqués par le bus de données (5) entre l'unité et l'appareil de commande disposé à distance (3, 4, 24, 25), **caractérisé en ce qu'**il est prévu plusieurs appareils de commande (3, 4, 24, 25) avec une unité d'émission/de réception de bus de données homogène (10, 11, 15, 16) à laquelle est couplé un bus de données de groupes (8, 20, 21), **en ce que** l'unité est conçue comme une interface capteur/actionneur (9, 17, 22, 23) spécifique aux groupes avec plusieurs raccordements disposés en parallèle pour les capteurs (12, 18) et un raccordement pour le bus de données de groupes (8, 20, 21), **en ce qu'**il est prévu un convertisseur de signaux pour la conversion des signaux de capteurs numériques de plusieurs capteurs (12, 18) dans le bus de signaux de données, de sorte que, en cas de modes de réalisation du dispositif pour différentes variantes de groupes avec différents capteurs (12, 18), on peut utiliser le même appareil de commande (3, 4, 24, 25) sans modifier son couplage de capteurs en terme de matériel, **en ce que** le convertisseur de signaux convertit les signaux de capteurs directement en signaux de bus de données en fonction d'un algorithme de commande/de réglage sans intercaler un calcul et **en ce que** l'interface capteur/actionneur (9, 17, 22, 23) est conçue selon au moins deux modes de réalisation pour des moyens de transport de série avec plusieurs variantes de moteur/de transmission, ces modes de réalisation se distinguant par le nombre de raccordements de capteurs prévus.

2. Dispositif selon la revendication 1, **caractérisé en ce que** des actionneurs (13, 19) peuvent être couplés en plus à l'interface capteur/actionneur (9, 17, 22, 23), les données de commande pour le ou les actionneurs (13, 19) entrant dans l'interface capteur/actionneur (9, 17, 22, 23) par l'intermédiaire du bus de données de groupes (8, 20, 21) étant converties en données numériques pour l'actionneur individuel (13 ou 19), de sorte que les actionneurs (13, 19) peuvent être commandés par l'intermédiaire des raccordements de capteurs/d'actionneurs correspondants.

3. Dispositif selon la revendication 1, **caractérisé en ce que** l'interface capteur/actionneur (9, 17, 22, 23) exécute une vérification des signaux de capteurs par rapport à la plage de valeurs prédéterminée et/ou une adaptation des signaux à une plage numérique prédéterminée.

4. Dispositif selon la revendication 1 ou 2, **caractérisé en ce que** l'interface capteur/actionneur (9, 17, 22, 23) comporte un dispositif de mémorisation dans lequel les signaux numériques de capteurs peuvent être mémorisés temporairement et **en ce que** l'unité d'émission/de réception de bus de données (10, 11, 15, 16) extrait les signaux numériques de capteurs du dispositif de mémorisation et les convertit en signaux de bus de données.

5. Dispositif selon l'une quelconque des revendications 1 à 4, **caractérisé en ce que**, en cas d'utilisation avec plusieurs modes de réalisation différents du dispositif avec un nombre différent de capteurs/d'actionneurs (12, 13, 18, 19) par rapport à l'appareil de commande disposé à distance (3, 4, 24, 25), il est prévu le même protocole de bus de données.

6. Dispositif selon l'une quelconque des revendications 1 à 5, **caractérisé en ce que**, avec certains moyens de transport de série, tous les raccordements de capteurs/d'actionneurs de l'interface capteur/actionneur utilisée (9, 17, 22, 23) ne sont pas occupés.
